# EUROPÄISCHE PATENTSCHRIFT

(11) **EP 0 638 025 B1**
(45) Veröffentlichungstag und Bekanntmachung des Hinweises auf die Patenterteilung: **01.05.1996**
(21) Anmeldenummer: 93908782.1
(22) Anmeldetag: 26.04.1993
(51) Int. Cl.: B60L 15/20

(54) **VERFAHREN ZUR ERMITTLUNG DER MOMENTENVORGABE BEI EINEM SCHIENENFAHRZEUG**
PROCESS FOR FINDING THE REFERENCE MOMENTS IN A RAIL VEHICLE
PROCEDE PERMETTANT DE DETERMINER LES MOMENTS DE REFERENCE D'UN VEHICULE SUR RAILS

(30) Priorität: 27.04.1992 AT 865/92
(43) Veröffentlichungstag der Anmeldung: 15.02.1995
(73) Patentinhaber: ELIN Energieanwendung Gesellschaft m.b.H., 1141 Wien (AT)
(72) Erfinder: GEYER, Hermann, A-2392 Sulz/Wienerwald (AT); HAFNER, Rüdiger, A-1110 Wien (AT); POLASEK, Helmut, A-1140 Wien (AT)
(74) Vertreter: Krause, Peter
(86) Internationale Anmeldenummer: AT9300071
(87) Internationale Veröffentlichungsnummer: WO9322153

(56) Entgegenhaltungen:
- EP-A- 0 080 139
- EP-A- 0 446 994

## Beschreibung

Die Erfindung betrifft ein Verfahren zur Ermittlung der Momentenvorgabe bei einem Schienenfahrzeug, wobei jedes angetriebene Rad mit einem Motor gekuppelt ist.

Bei den Triebwagen von Schienenfahrzeugen sind normalerweise zwei Drehgestelle vorgesehen, wobei auf jedem zwei Starrachsen mit Rädern angeordnet sind. Bei Straßenbahnen werden beide Achsen in einem Drehgestell über ein Getriebe von einem Motor angetrieben. Die Lauffläche der Räder ist im allgemeinen bei den Schienenfahrzeugen konisch. Dadurch kommt es durch die Starrachse zu Schlingerbewegungen bzw. einer Sinusbewegung der Drehgestelle und die Lauffläche der Räder wird somit gleichmäßig abgenützt. In engen Kurven tritt dabei eine hohe Geräuschentwicklung auf.

In letzter Zeit ist die Tendenz zu Straßenbahnen mit Einzelradantrieb, wobei jedes Rad von einem Motor angetrieben wird. Damit können schienengebundene Nahverkehrsmittel mit geringer Fußbodenhöhe realisiert werden. Ein Sinusverlauf des Schienenfahrzeuges tritt dabei nicht von selbst auf (vgl. EP-A-0 446 994).

Die Aufgabe der Erfindung besteht nun darin, einen Quasisinuslauf in Längsrichtung des Schienenfahrzeuges zu erreichen.

Die Aufgabe wird durch die Erfindung gelöst, welche dadurch gekennzeichnet ist, daß aus der Drehzahl eines links- und rechtsseitigen Lauf- oder Antriebsrades der Mittelwert gebildet wird, und dieser ein periodisches Signal in der Frequenz und/oder Amplitude steuert, welches einerseits direkt und andererseits nach Invertierung dem vorgegebenen Drehmomentsollwert überlagert wird, wobei ein verknüpfter Drehmomentsollwert den rechtsseitigen und der andere den linksseitigen Antriebsmotoren zugeordnet wird. Durch das Verfahren wird bei Schienenfahrzeugen mit Einzelradantrieb eine geringe und gleichmäßige Abnützung der Lauffläche der Antriebsräder erreicht. Weiters ist auch die Geräuschentwicklung minimal.

Von Vorteil ist, daß das periodische Signal ein Sinus-, Dreieck- oder Rechtecksignal ist. Am zweckmäßigsten ist dabei das Rechtecksignal, da es die gleiche Wirkung wie die beiden anderen Signale hat, jedoch die Antriebsmotoren weniger belastet.

Nach einer Ausgestaltung der Erfindung wird bei einer Kurvenfahrt, bei Schleuder- und/oder Gleitvorgängen oder bei Unterschreiten einer Minimalgeschwindigkeit des Schienenfahrzeuges das dem Drehmomentsollwert überlagerte periodische Signal ausgeblendet wird. Dadurch werden nicht vorhersehbare Kräfteverhältnisse am Schienenfahrzeug vermieden.

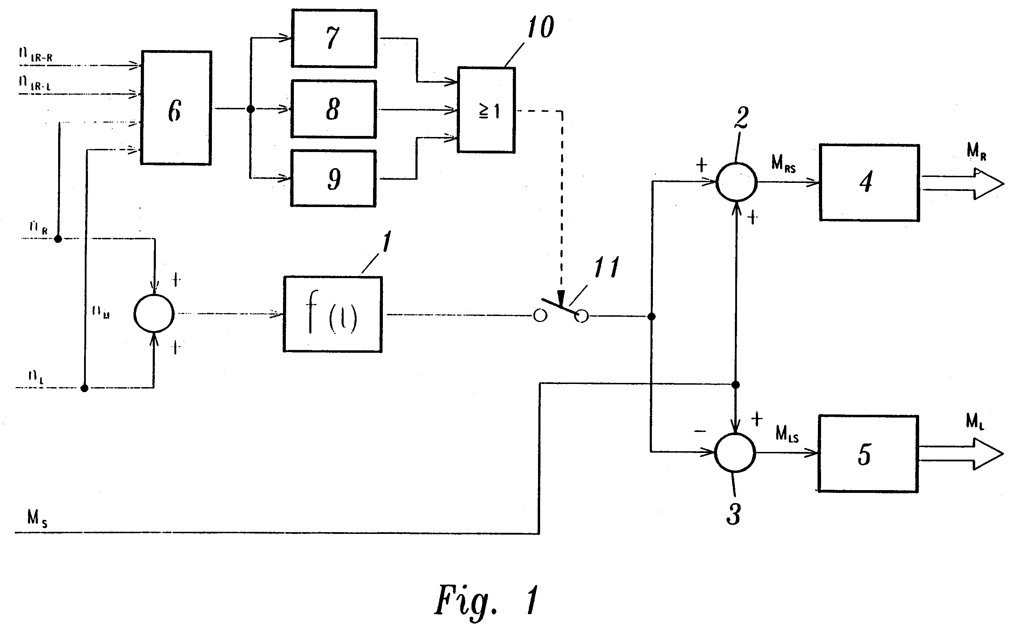

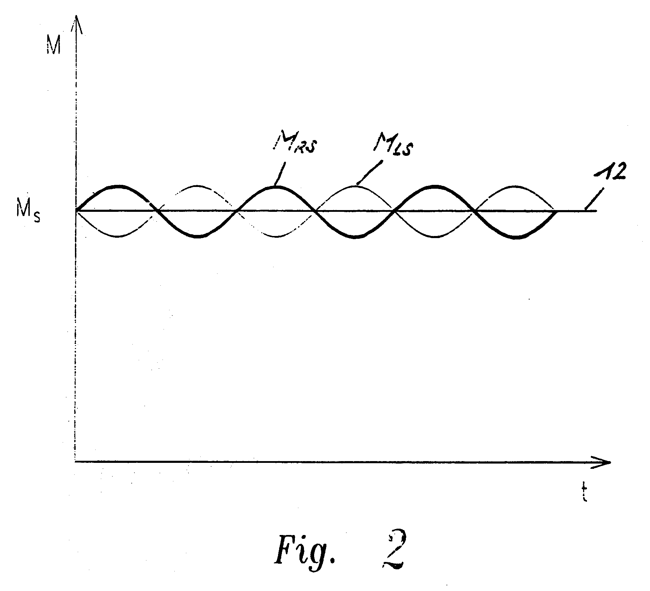

An Hand der Zeichnungen wird die Erfindung nun noch näher erläutert. In Fig. 1 ist schematisch eine Anordnung zur Durchführung des Verfahrens dargestellt und Fig. 2 zeigt den Momentensollwert über der Zeit für die links- und rechtsseitigen Antriebsmotoren.

In der Fig. 1 ist ein spezieller Frequenzgenerator 1 dargestellt, dem der Drehzahlmittelwert n_{M} von einem linksseitigen n_{L} und einem rechtsseitigen n_{R} Antriebsmotor zugeführt wird. Das Ausgangssignal des Frequenzgenerators 1 wird bei der Verknüpfungsstelle 2 direkt und bei der Verknüpfungsstelle 3 nach vorheriger Drehung um 180° dem Momentensollwert M_{S} überlagert. Einer der beiden neuen Momentensollwerte M_{RS} wird dem Antriebsleitgerät 4 für die Motoren der rechten Seite und der andere Momentensollwert M_{LS} dem Antriebsleitgerät 5 für die Motoren der linken Seite zugeführt.

Weiters ist eine Drehzahlauswertung 6, der die Drehzahlen n_{R}, n_{L} von zwei Antriebsmotoren und von einem links- und rechtseitigen Laufrad n_{LR-R}, n_{LR-L} zugeführt werden. Der Drehzahlauswertung 6 ist eine Erkennungsschaltung für Kurvenfahrt 7, eine für Schleuder-/Gleitvorgänge 8 und eine für Unterschreiten einer Minimalgeschwindigkeit 9 nachgeschaltet. Alle drei Erkennungsschaltungen 7,8,9 sind über eine ODER-Verknüpfung 10 zusammengeführt, die einen Schalter 11 am Ausgang des Frequenzgenerators 1 ansteuert. Bei Auftreten einer durch die Erkennungsschaltungen 7,8,9 festgestellten Zustände wird der Schalter 11 geöffnet, wodurch dem Momentensollwert M_{S} kein periodisches Signal überlagert wird.

In dem Zeitdiagramm des Momentensollwertes M_{S} sind die den Antriebsleitgeräten 4,5 zugeführten Drehmomentensollwerte M_{RS}, M_{LS} bei einem Sinus als periodisches Signal dargestellt. Es ist zu erkennen, daß das vorgegebene resultierende Drehmoment 12 zu jedem Zeitpunkt gleich groß ist.

## Patentansprüche

1. Verfahren zur Ermittlung der Momentenvorgabe bei einem Schienenfahrzeug, wobei jedes angetriebene Rad mit einem Motor gekuppelt ist, dadurch gekennzeichnet, daß aus der Drehzahl (n_{R}, n_{L}) eines links- und rechtsseitigen Lauf- oder Antriebsrades der Mittelwert (n_{M}) gebildet wird, und dieser ein periodisches Signal in der Frequenz und/oder Amplitude steuert, welches einerseits direkt und andererseits nach Invertierung dem vorgegebenen Drehmomentsollwert (M_{S}) überlagert wird, wobei ein verknüpfter Drehmomentsollwert den rechtsseitigen (M_{RS}) und der andere den linksseitigen (M_{LS}) Antriebsmotoren zugeordnet wird.

2. Verfahren nach Anspruch 1, dadurch gekennzeichnet, daß das periodische Signal ein Sinus-, Dreieck- oder Rechtecksignal ist.

3. Verfahren nach Anspruch 1 oder 2, dadurch gekennzeichnet, daß bei einer Kurvenfahrt, bei Schleuder- und/oder Gleitvorgängen oder bei unterschreiten einer Minimalgeschwindigkeit des Schienenfahrzeuges das dem Drehmomentsollwert überlagerte periodische Signal ausgeblendet wird.

## Claims

1. Determination method for the torque attribution for a railway vehicle, each driven wheel being linked to a motor, characterized in that from the revolution speed (nR, nL) of a mobile wheel or a driving wheel, right and left side, the average value (nM) is calculated to control the frequency and/or the amplitude of a periodic signal that is superposed, on the one hand, directly and, on the other hand, after inversion, to the preset torque target value (Ms), a combined torque target value being associated to driving motors (MRS) situated of the right side and an other combined torque target value being associated to driving motors (MLS) situated of the left side.

2. Method according to claim 1, characterized in that the periodic signal waveform is sinusoïdal, triangular or rectangular.

3. Method according to claim 1 or claim 2, characterized in that the periodic signal superposed to the torque target value is suppressed while runing in curve, during an overstirring period and/or slipping or if the speed of the railway vehicle comes under a minimum value.

## Revendications

1. Procédé de détermination de l'attribution de couple pour un véhicule ferroviaire, chaque roue entraînée étant couplée à un moteur, caractérisé en ce qu'à partir de la vitesse de rotation (n_{R}, n_{L}) d'une roue mobile ou d'une roue d'entraînement, de côté gauche et droite, on constitue la valeur moyenne (n_{M}) et celle-ci commande un signal périodique pour ce qui concerne la fréquence et/ou l'amplitude, signal qui est superposé, d'une part, directement et, d'autre part, après inversion, à la valeur de consigne de couple (M_{S}) prédéterminée, une valeur de consigne de couple combinée étant associée aux moteurs d'entraînement situés du côté droit (M_{RS}) et une autre valeur de consigne de couple combinée étant associée aux moteurs d'entraînement situés du côté gauche (M_{LS}).

2. Procédé selon la revendication 1, caractérisé en ce que le signal périodique est un signal d'allure sinusoïdale, triangulaire ou rectangulaire.

3. Procédé selon la revendication 1 ou la revendication 2, caractérisé en ce que le signal périodique superposé à la valeur de consigne de couple est supprimé lorsqu'on est en roulage en courbe, lors de processus d'emballement et/ou de glissement ou en cas de descente au-dessous d'une vitesse minimale du véhicule ferroviaire.
